# EUROPÄISCHE PATENTSCHRIFT

(11) **EP 2 544 913 B1**
(45) Veröffentlichungstag und Bekanntmachung des Hinweises auf die Patenterteilung: **20.04.2016**
(21) Anmeldenummer: 10795929.8
(22) Anmeldetag: 07.12.2010
(51) Int. Cl.: B60K 17/02, B60K 17/10, B60K 17/356, B60W 10/02, B60W 10/10, F16H 61/465, F16H 61/04

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE À MOTEUR

(30) Priorität: 06.03.2010 DE 102010010473
(43) Veröffentlichungstag der Anmeldung: 16.01.2013
(73) Patentinhaber: Daimler AG, 70327 Stuttgart (DE)
(72) Erfinder: PEDROTTI, Wolfgang, 73760 Ostfildern (DE); KAISER, Stefan, 70569 Stuttgart (DE)
(74) Vertreter: JENSEN & SON
(86) Internationale Anmeldenummer: PCT/EP2010/007416
(87) Internationale Veröffentlichungsnummer: WO 2011/110206

(56) Entgegenhaltungen:
- EP-A1- 0 230 022
- EP-A1- 0 993 982
- US-A- 3 811 525
- US-A- 4 667 536
- US-A- 5 971 092

## Beschreibung

Die Erfindung betrifft eine Antriebseinrichtung für ein Kraftfahrzeug nach dem Oberbegriff des Anspruchs 1.

Die gattungsgemäße Schrift DE 4110161 A1 beschreibt eine Antriebseinheit eines Kraftfahrzeuges mit einer Antriebsmaschine, einem mechanischen Hauptantriebspfad und einem hydraulischen Zusatzantriebspfad. Die Antriebsmaschine ist als Verbrennungsmotor dargestellt der über den mechanischen Hauptantriebspfad die Hinterräder eines Kraftfahrzeuges antreibt. Der hydraulische Zusatzantriebspfad weist eine einstellbare hydrostatische Pumpe und einen Hydromotor auf, die durch einen hydraulischen Kreis verbunden sind. Die Pumpe ist permanent über eine Übersetzung mit einem Nebenabtrieb der Antriebsmaschine verbunden. Die Pumpe ist als Schrägscheibenregelpumpe ausgeführt.

Dem gegenüber ist es die Aufgabe der Erfindung, eine effiziente und komfortable Antriebseinrichtung für Kraftfahrzeuge vorzuschlagen.

Erfindungsgemäß wird die Aufgabe durch eine Antriebseinrichtung für Kraftfahrzeuge mit den Merkmalen des Anspruchs 1 gelöst.

Erfindungsgemäß ist zwischen der einstellbaren hydrostatischen Pumpe und dem Nebenabtrieb der Antriebsmaschine eine ansteuerbare Kupplung angeordnet.
Die Pumpe ist über die Kupplung mit dem Nebenabtrieb antreibbar verbunden, so dass eine Leistungsübertragung über den hydraulischen Zusatzantriebspfad zu den Hydromotoren möglich ist. Die antreibbare Verbindung zwischen der Pumpe und dem Nebenabtrieb ist durch die Kupplung auftrennbar, so dass die Pumpe nicht dauerhaft mit dem Nebenabtrieb antreibbar verbunden ist. Die Pumpe ist durch die Kupplung zuschaltbar und abschaltbar und ist nur bei Bedarf angetrieben.

Ist der Zusatzantriebspfad abgeschaltet, ist auch die Kupplung geöffnet und die Pumpe ist nicht angetrieben, was Antriebsleistung spart und einen hohen Wirkungsgrad der Antriebeinrichtung hat.

In einer vorteilhaften Weiterbildung der Antriebseinrichtung ist die Kupplung als eine Klauenkupplung ausgeführt.
Die Klauenkupplung stellt eine Antriebsverbindung zwischen dem Nebenabtrieb der Antriebsmaschine und der Pumpe durch Formschluss her, so dass keine zusätzliche Verlustleistung an der Kupplung anfällt. Eine Klauenkupplung ist insbesondere günstig zu produzieren und ist in technischer Anwendung robust und verschleißarm.

In einer vorteilhaften Weiterbildung der Antriebseinrichtung ist die Kupplung als eine Schaltkupplung mit einer Synchronisierung ausgeführt.
Die Schaltkupplung mit Synchronisierung stellt eine Antriebsverbindung zwischen dem Nebenabtrieb der Antriebsmaschine und der Pumpe durch Formschluss her, so dass keine zusätzliche Verlustleistung an der Kupplung anfällt. Die Synchronisierung erleichtert ein Einrücken der Kupplung beim Zuschalten des hydraulischen Zusatzantriebspfades und hebt den Fahrkomfort des Kraftfahrzeuges.
Je nach Drehzahlbereich der Antriebsmaschine und Drehzahlbereich der Pumpe kann eine Übersetzung zwischen dem Nebenabtrieb der Antriebsmaschine und der Pumpe angeordnet sein. Die Schaltkupplung mit Synchronisierung ist empfehlenswert an der Übersetzung angeordnet, wobei die Übersetzung über ein Losrad verfügt, welches über die Schaltkupplung mit Synchronisierung mit einer Welle in Wirkverbindung bringbar ist.

In einer vorteilhaften Weiterbildung der Antriebseinrichtung ist die Pumpe als Axialkolbenmaschine ausgestaltet.
Axialkolbenmaschinen sind in allen Leistungsbereichen erhältlich und weisen geringe Verlustleistungen auf, so dass der hydraulische Zusatzantriebspfad eine hohe Effizienz aufweist.

In einer vorteilhaften Weiterbildung der Antriebseinrichtung verfügt der hydraulische Kreis über eine Spülpumpe.
Die Spülpumpe ist insbesondere mechanisch durch die Antriebsmaschine antreibbar, wobei auch eine elektrisch angetriebene Spülpumpe verwendbar ist. Die Spülpumpe speist den hydraulischen Kreis mit Hydraulikflüssigkeit aus einem Sumpf, wobei ein hydraulischer Volumenstrom im hydraulischen Kreis entsteht, der insbesondere über die einstellbare hydrostatische Pumpe fließt. Durch den genannten hydraulischen Volumenstrom ist die einstellbare hydrostatische Pumpe bei ausgerückter Kupplung in Drehung versetzbar. Die Spülpumpe kann insbesondere als Flügelpumpe mit einer konstanten Pumpleistung ausgeführt sein.

In einer vorteilhaften Weiterbildung der Antriebseinrichtung ist ein Torsionsdämpfer zwischen dem Nebenabtrieb der Antriebsmaschine und der Pumpe angeordnet.
Der Torsionsdämpfer dämpft Rotationsschwingungen der Antriebsmaschine ab, die über den Nebenabtrieb auf die Pumpe übertragen werden und trägt damit zur Erhöhung der Lebensdauer und Betriebsfestigkeit des Nebenantriebes bei.

Bei einem Verfahren zum Betrieb einer Antriebseinrichtung eines Kraftfahrzeuges, wie sie zuvor beschrieben ist, wird zum Schließen der Kupplung zwischen dem Nebenabtrieb der Antriebsmaschine und der Pumpe bei ausgerückter Kupplung ein hydraulischer Volumenstrom von einem Förderelement erzeugt. Das Förderelement ist im hydraulischen Kreis angeordnet und speist den genannten hydraulischen Volumenstrom so in den hydraulischen Kreis ein, dass der Volumenstrom über die Pumpe fließt. Bei ausgerückter Kupplung ist die Pumpe nicht antreibbar mit dem Nebenabtrieb verbunden, so dass der Volumenstrom die Pumpe derart in Drehung versetzt, dass eine Differenzdrehzahl der Kupplung vermindert wird.
Beim Schließen der Kupplung wird die Differenzdrehzahl an der Kupplung vermindert bis bei geschlossener Kupplung kein Schlupf mehr stattfindet und die Kupplungselemente mit der gleichen Geschwindigkeit drehen. Da bei geöffneter Kupplung der Nebenabtrieb der Antriebsmaschine mit der Drehgeschwindigkeit der Antriebsmaschine dreht und die Pumpe hauptsächlich in Ruhe ist und keine Drehzahl aufweist, muss zum Schließen der Kupplung die Pumpe und eine zugehörige Pumpeneingangswelle beschleunigt werden. Ein Beschleunigungsvorgang der Pumpe wird durch den genannten hydraulischen Volumenstrom des Förderelementes unterstützt, da der Volumenstrom über die Pumpe fließt und die Pumpe bei geöffneter Kupplung antreibt. Der Volumenstrom beschleunigt die Drehung der Pumpe derart, dass die Differenzgeschwindigkeit der Kupplung vermindert wird.

In einer vorteilhaften Weiterbildung des Verfahrens wird die einstellbare hydrostatische Pumpe abhängig von einer Zieldrehzahl des Nebenabtriebes eingestellt.
Eine Pumpleistung der Pumpe wird nun so eingesellt, dass der Volumenstrom die Pumpe mit einer Drehzahl dreht, die die Differenzdrehzahl an der Kupplung zwischen dem Nebenabtrieb und der Pumpe vermindert, wobei die Differenzdrehzahl von der Drehzahl des Nebenabtriebes und der Drehzahl der Pumpe abhängt. Insbesondere hängt die Einstellung der Pumpe auch vom Volumenstrom ab, der durch die Pumpe fließt. Das Einstellen der Pumpe kann insbesondere durch eine Steuerung oder Regelung erfolgen.

In einer vorteilhaften Weiterbildung des Verfahrens wird der genannte hydraulische Volumenstrom zumindest teilweise von einer Spülpumpe erzeugt wird.
Die Spülpumpe ist derart am hydraulischen Kreis angeschlossen, dass der Volumenstrom, der von Ihr erzeugt wird, über die Pumpe fließt. Die Spülpumpe übernimmt somit teilweise die Funktion des Förderelementes im hydraulischen Kreis.

In einer vorteilhaften Weiterbildung des Verfahrens wird der genannte hydraulische Volumenstrom zumindest teilweise vom Hydromotor eines sich drehenden Rades erzeugt. Der Hydromotor eines Rades wandelt einen hydraulischen Volumenstrom in eine Drehbewegung um, aber auch eine Drehbewegung in einen hydraulischen Volumenstrom. Ein sich drehendes Rad mit Hydromotor stellt so auch ein Förderelement im hydraulischen Kreis dar. Ein drehendes Rad eines fahrenden Kraftfahrzeuges kann über den Hydromotor einen hydraulischen Volumenstrom erzeugen, der durch den hydraulischen Kreis fließt. Der Volumenstrom, der über die Pumpe fließt, wird zumindest teilweise von dem Hydromotor erzeugt. Der Volumenstrom, der vom Hydromotor erzeugt wird, kann durch einen Volumenstrom, der von der Spülpumpe erzeugt wird, verstärkt werden. Die Spülpumpe liefert insbesondere nur einen Teil des Volumenstroms und kann daher klein ausgelegt sein, was Gewicht und Energie spart. Ist der Volumenstrom von den Hydromotoren ausreichend für die Beschleunigung der Drehung der Pumpe, muss die Spülpumpe keine Pumpleistung bringen, was Energie spart und die Effizienz der Antriebseinrichtung erhöht.

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert.

Die Erfindung wird anhand der folgenden Ausführungsbeispiele näher erläutert. Dabei zeigen:
- Fig. 1: eine schematische Darstellung eines Kraftfahrzeuges mit Antriebsmaschine, einem mechanischen Hauptantriebspfad und einem hydraulischen Zusatzantriebspfad,
- Fig. 2: eine schematische Darstellung einer am Nebenabtrieb der Antriebsmaschine angeordneten hydrostatischen Pumpe.

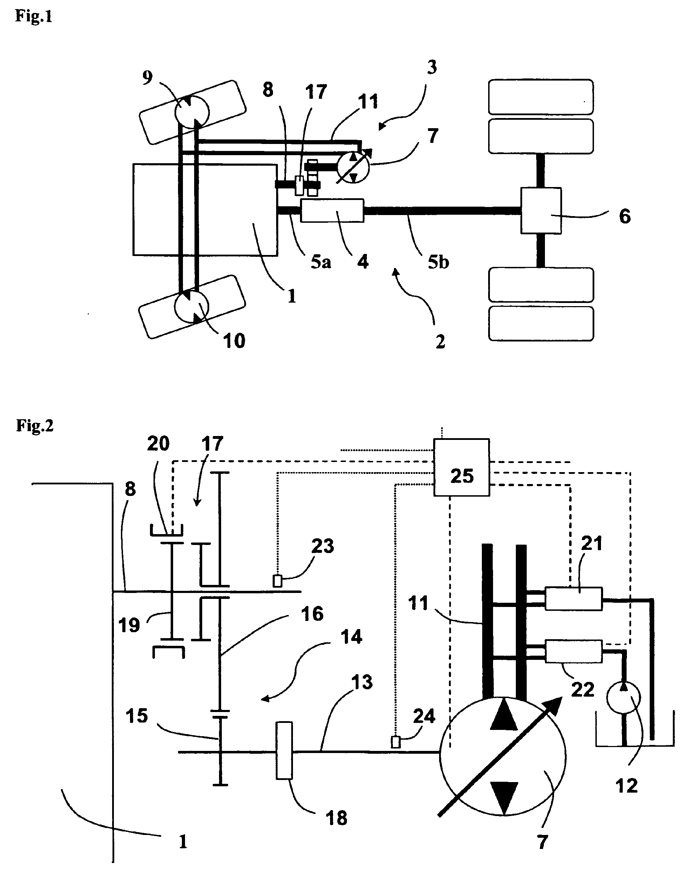

Figur 1 zeigt eine schematische Darstellung einer Antriebseinrichtung eines Kraftfahrzeuges mit einer Antriebsmaschine 1, einem mechanischen Hauptantriebspfad 2 und einem hydraulischen Zusatzantriebspfad 3.
Der mechanische Hauptantriebspfad 2 überträgt einen Teil einer Antriebskraft der Antriebsmaschine 1 über eine Hauptabtriebswelle 5a, eine Getriebeeinheit 4 und eine Antriebswelle 5b auf eine Hinterachseinheit 6 des Kraftfahrzeuges. Der mechanische Hauptantriebspfad 2 überträgt insbesondere bei normaler Straßenfahrt hauptsächlich die Antriebskraft und entspricht bekannter Technik für Kraftfahrzeuge.
Der hydraulische Zusatzantriebspfad 3 verfügt über einen hydraulischen Kreis 11 mit einer einstellbaren hydrostatischen Pumpe 7 und je einem Hydromotor 9,10 in den Vorderrädern des Kraftfahrzeuges, welche nicht über den mechanischen Hauptantriebspfad antreibbar sind. Die Pumpe 7 ist an einem Nebenabtrieb 8 der Antriebsmaschine 1 angeordnet. Der Nebenabtrieb 8 ist in der Antriebsmaschine 1 mit der Hauptabtriebswelle 5a verbunden und dreht sich mit proportionaler Drehzahl. Zwischen der Pumpe 7 und dem Nebenabtrieb 8 ist eine Kupplung 17 angeordnet. Durch die Kupplung 17 ist die Pumpe 7 vom Nebenabtrieb 8 abtrennbar.
Die Pumpe 7 ist insbesondere als Axialkolbenmaschine dargestellt, bei der durch einen Schwenkwinkel der Pumpe 7 eine Förderleistung und eine Förderrichtung einstellbar ist. Bei ausgeschaltetem hydraulischem Zusatzantriebspfad 3 überträgt die Pumpe 7 keine Leistung an die Hydromotoren 9,10. Durch Öffnen der Kupplung 17 ist die Pumpe 7 vom Nebenabtrieb 8 abgetrennt und an der Pumpe 7 fällt keine Verlustleistung an, obwohl sich der Nebenabtrieb 8 permanent weiter dreht.

Figur 2 zeigt eine schematische Darstellung der am Nebenabtrieb 8 der Antriebsmaschine 1 angeordneten hydrostatischen Pumpe 7.
Zwischen der Pumpe 7 und dem Nebenabtrieb 8 ist eine Übersetzung 14 angeordnet, die über ein Losrad 16 auf dem Nebenabtrieb 8 und über ein Festrad 15 auf einer Pumpeneingangswelle 13 verfügt. Das Losrad 16 ist über die Kupplung 17 drehfest mit dem Nebenabtrieb verbindbar, wobei die Kupplung 17 als Klauenkupplung zum Losrad 16 ausgeführt ist und über ein Festrad 19 auf dem Nebenabtrieb 8 und eine Schiebemuffe 20 verfügt. Bei geschlossener Kupplung 17 verbindet die Schiebemuffe 20 das Losrad 16 formschlüssig mit dem Festrad 19.
Zwischen dem Nebenabtrieb 8 und der Pumpe 7 ist ein Torsionsdämpfer 18 angeordnet. Der Torsionsdämpfer 18 ist als ein Element der Pumpeneingangswelle 13 ausgeführt. Die Pumpe 7 ist mit dem hydraulischen Kreis 11 verbunden, der über eine Spülpumpe 12 verfügt. Die Spülpumpe 12 speist aus einem Hydrauliksumpf Hydraulikflüssigkeit über ein Ventil 22 in den hydraulischen Kreis 11 ein. Das Ventil 22 ist als Schaltventil mit Rückschlagventil ausgeführt, so dass beim Betrieb der Pumpe 7 die Spülpumpe 12 nicht mit einem hohen Druck des hydraulischen Kreises 11 auf der Hochdruckseite der Pumpe 7 beaufschlagt ist, aber weiterhin Hydraulikflüssigkeit auf der Niederdruckseite der Pumpe 7 in den hydraulischen Kreis 11 einspeisen kann. Das Ventil 22 verfügt über eine Verbindung zum hydraulischen Kreis 11 auf einer Niederdruckseite der Pumpe 7 und eine Verbindung zum hydraulischen Kreis 11 auf einer Hochdruckseite der Pumpe 7, wobei über das Ventil 22 nur durch die Verbindung zum hydraulischen Kreis 11 auf der Niederdruckseite der Pumpe 7 Hydraulikflüssigkeit einspeist und das Ventil 22 die Verbindung zum hydraulischen Kreis 11 auf der Hochdruckseite der Pumpe 7 sperrt.
Die Spülpumpe 12 dient auch als Speisepumpe für den hydraulischen Kreis um Leckagen und anderen Hydraulikflüssigkeitsdefizite auszugleichen
Über ein ansteuerbares Ventil 21, welches als Schaltventil ausgeführt ist, ist der hydraulische Kreis 11 mit dem Hydrauliksumpf verbunden, wobei je nach Schaltstellung des Ventils 21 die Verbindung zum Hydrauliksumpf offen oder geschlossen ist. Das Ventil 21 verfügt über eine Verbindung zum hydraulischen Kreis 11 auf einer Niederdruckseite der Pumpe 7 und eine Verbindung zum hydraulischen Kreis 11 auf einer Hochdruckseite der Pumpe 7, wobei das Ventil 21 je nach Schaltstellung nur eine Verbindung öffnet und die andere Verbindung sperrt oder beide Verbindungen sperrt.
Bei geöffneter Kupplung 17 ist über Schaltstellungen des Ventils 22 und des Ventils 21 eine Durchflussrichtung eines von der Spülpumpe 12 erzeugten Volumenstromes durch die Pumpe 7 einstellbar. Der Volumenstrom fließt aus dem Hydrauliksumpf über die Spülpumpe 12, das Ventil 22, durch die Pumpe 7 und über das Ventil 21 wieder in den Hydrauliksumpf. Je nach Schaltstellungen der Ventile 22,21 ergibt sich eine Durchflussrichtung des Volumenstromes durch die Pumpe 7.
Andere technische Standardelemente eines Hydraulikkreises, wie insbesondere Überdruckventile, Sperrventile, Hydraulikflüssigkeitsfilter und Hydraulikflüssigkeitskühler sowie deren genaue Verschaltung im hydraulischen Kreis 11 sind nicht in der Darstellung enthalten.
Eine Steuereinheit 25 steuert die Stellung der Ventile 21,22 und weiterer nicht dargestellter Ventile und Hydraulikelemente. Die Steuereinheit 25 regelt auch die Einstellung der Pumpe 7 und die Position der Schiebemuffe 20 der Kupplung 17.
Dazu verarbeitet die Steuereinheit 25 Signale von Sensoren wie einem Drehzahlsensor 23 am Nebenabtrieb 8, einem Drehzahlsensor 24 an der Pumpeneingangswelle 13 und weiterer nicht dargestellter Sensoren. Ersatzweise zum Signal des Drehzahlsensors 23 am Nebenabtrieb 8 kann auch ein Signal über eine Drehzahl der Antriebsmaschine 1 verwendet werden, da eine Drehzahl des Nebenabtriebs 8 proportional der Drehzahl der Antriebsmaschine 1 ist.

Im normalen Straßenfahrbetrieb wird die Antriebsleistung über den mechanischen Hauptantriebspfad 2 übertragen. Der hydraulische Zusatzantriebspfad 3 ist abgeschaltet und die Kupplung 17 ist geöffnet, so dass die Pumpe 7 vom Nebenabtrieb 8 abgetrennt ist. Der Nebenabtrieb 8 dreht sich permanent mit einer der Antriebsmaschine 1 entsprechender Drehzahl und die Pumpe 7 steht hauptsächlich still. Das Ventil 21 ist geöffnet, so dass Hydraulikflüssigkeit aus dem hydraulischen Kreis 11 in den Hydrauliksumpf fließt und die Spülpumpe 12 Hydraulikflüssigkeit aus dem Hydrauliksumpf in den hydraulischen Kreis 11 nachliefert.
Soll nun bei Bedarf der hydraulische Zusatzantriebspfad 2 zum mechanischen Hauptantriebspfad 3 hinzugeschaltet werden oder aus dem Stand nur mit dem hydraulischen Zusatzantriebspfad angefahren werden, muss die Kupplung 17 geschlossen werden. Da sich der Nebenabtrieb 8 mit einer Drehzahl dreht und die Pumpe 7 hauptsächlich still steht, ergibt sich eine Differenzdrehzahl an der Kupplung 17. Die Kupplung 17 ist als Klauenkupplung ausgeführt und lässt sich nur bei sehr kleinen Differenzdrehzahlen an der Kupplung 17 einrücken, so dass zum Schließen der Kupplung 17 die Differenzdrehzahl vermindert werden muss, indem eine Drehzahl der Pumpe 7 beschleunigt wird.
Zum Schließen der Kupplung 17 wird folgendes Verfahren zum Beschleunigen der Drehbewegung der Pumpe angewandt. Bei noch geöffneter Kupplung 17 ist das Ventil 21 geöffnet und die Spülpumpe 12 pumpt Hydraulikflüssigkeit aus dem Hydrauliksumpf in den hydraulischen Kreis 11. Die Ventile 21, 22 sind derart geschaltet, dass der Volumenstrom aus Hydraulikflüssigkeit, der von der Spülpumpe 12 erzeugt wird, durch das Ventil 22, die Pumpe 7 und das Ventil 21 wieder zurück in den Hydrauliksumpf fließt. Die Steuereinheit 25 regelt nun eine Pumpleistung der Pumpe 7 abhängig vom Signal der Drehzahl am Nebenabtrieb 8 und vom Signal der Drehzahl an der Pumpeneingangswelle 13. Zum Schließen der Kupplung 17 müssen sich die beiden Drehzahlen annähern, so dass die Differenzdrehzahl an der Kupplung 17 gegen Null geht. Die Steuereinheit 25 regelt dementsprechend die Pumpleistung der Pumpe 7 so, dass die Pumpe 7 durch den Volumenstrom der Spülpumpe 12 so lange beschleunigt wird, bis die Differenzdrehzahl an der Kupplung 17 klein genug ist, um ein Schließen der Kupplung 17 ohne Komforteinbusen und Verschleißerscheinungen zu ermöglichen. Die Steuereinheit 25 veranlasst abhängig von der Differenzdrehzahl an der Kupplung 17 das Schließen der Kupplung 17.

Bei geschlossener Kupplung 17 wird nun auch das Ventil 21 geschlossen, damit die Pumpleistung der Pumpe 7, die nun von der Antriebsmaschine 1 stammt, nicht aus dem hydraulischen Kreis 11 in den Hydrauliksumpf fließt. An anderer Stelle öffnet die Steuereinheit 25 nicht dargestellte Schaltventile, die den hydraulischen Kreis 11 über die Hydromotoren 9,10 in den Rädern leitet. Durch die geschlossene Kupplung 17 und die Schaltung von Ventilen wird nun Antriebskraft von der Antriebsmaschine 1 über den Nebenabtrieb 8, die Pumpe 7, den hydraulischen Kreis 11 bis hin zu den Hydromotoren 9,10 in den Rädern übertragen. Der Antrieb des Kraftfahrzeuges findet nun zumindest teilweise über den hydraulischen Zusatzantriebspfad statt.
Zum Öffnen der Kupplung regelt die Steuereinheit 25 die Pumpleistung der Pumpe 7 so ein, dass fast kein Leistungsübertrag vom Nebenabtrieb 8 auf die Pumpe 7 stattfindet und so die Kupplung 17 leicht ausgerückt werden kann.

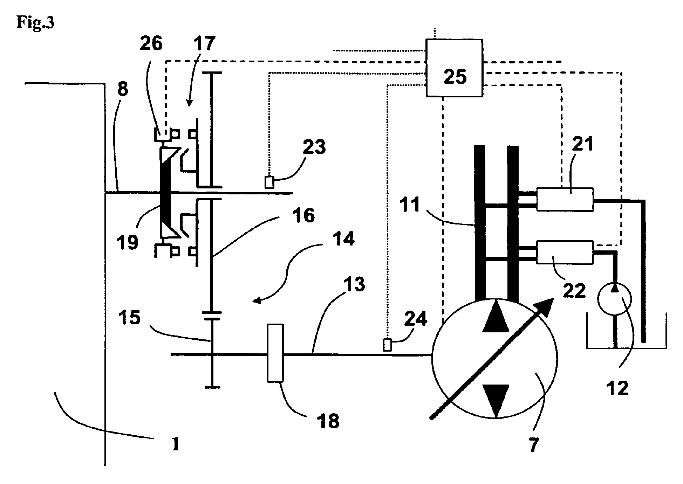

Figur 3 zeigt eine bis auf die Ausführung der Kupplung 17 weitgehend zu Figur 2 identische schematische Darstellung der am Nebenabtrieb 8 angeordneten hydrostatischen Pumpe 7.
Alle zuvor eingeführten und beschrieben Elemente und Bezugzeichen werden für die Figur 3 aus der Figur 2 übernommen und nicht noch mal aufgeführt. Gleiche Elemente weisen auch die gleiche Funktion auf.
In der dargestellten Ausführung der Erfindung ist die Kupplung 17 als Schaltkupplung 26 mit Synchronisierung ausgeführt. Die Schaltkupplung 26 verbindet den Nebenabtrieb 8 formschlüssig mit dem Losrad 16, welches auf dem Nebenabtrieb 8 angeordnet ist und Teil der Übersetzung 14 vom Nebenabtrieb 8 zur Pumpeneingangswelle 13 ist.
Die Schaltkupplung 26 verfügt über eine Synchronisierung, welche das Schließen der Kupplung 17 unterstützt, wobei die Synchronisierung durch Reibungsverluste eine Differenzdrehzahl an der Kupplung 17 während des Schließens zusätzlich vermindert. Das aus Figur 2 bekannte Verfahren zum Schließen der Kupplung 17 wird auch in Figur 3 angewandt, wobei die Synchronisierung der Schaltkupplung 26 das Schließen der Kupplung 17 unterstützt. Die Steuereinheit 25 veranlasst ein Verschieben der Schaltkupplung 26 zum Schließen der Kupplung 17 schon bei etwas größeren Differenzdrehzahlen an der Kupplung 17 wie es die Steuereinheit 25 aus Figur 2 für die Schiebemuffe 20 der Klauenkupplung veranlasst hat.

## Patentansprüche

1. Antriebseinrichtung für ein Kraftfahrzeug,
mit einer Antriebsmaschine (1), einem mechanischen Haupantriebspfad (2) und einem hydraulischen Zusatzantriebspfad (3),
wobei der hydraulische Zusatzantriebspfad (3) über einen hydraulischen Kreis (11) mit einer einstellbaren hydrostatischen Pumpe (7) und einem Hydromotor (9,10) verfügt und die einstellbare hydrostatische Pumpe (7) über einen Nebenabtrieb (8) der Antriebsmaschine (1) antreibbar ist,
**dadurch gekennzeichnet, dass**
eine ansteuerbare Kupplung (17) zwischen der Pumpe (7) und dem Nebenabtrieb (8) angeordnet ist.

2. Antriebseinrichtung nach Anspruch 1,
**dadurch gekennzeichnet, dass**
die Kupplung (17) als eine Klauenkupplung ausgeführt ist.

3. Antriebseinrichtung nach Anspruch 1,
**dadurch gekennzeichnet, dass**
die Kupplung (17) als eine Schaltkupplung (17) mit einer Synchronisierung ausgeführt ist.

4. Antriebseinrichtung nach einem der vorherigen Ansprüche,
**dadurch gekennzeichnet, dass**
die Pumpe (7) als eine Axialkolbenmaschine ausgestaltet ist.

5. Antriebseinrichtung nach einem der vorherigen Ansprüche,
**dadurch gekennzeichnet, dass**
der hydraulische Kreis (11) über eine Spülpumpe (12) verfügt.

6. Antriebseinrichtung nach einem der vorherigen Ansprüche,
**dadurch gekennzeichnet, dass**
ein Torsionsdämpfer (18) zwischen dem Nebenabtrieb (8) der Antriebsmaschine (1) und der Pumpe (7) angeordnet ist.

7. Verfahren zum Betrieb einer Antriebseinrichtung eines Kraftfahrzeuges
mit einer Antriebsmaschine (1), einem mechanischen Haupantriebspfad (2) und einem hydraulischen Zusatzantriebspfad (3),
wobei der hydraulische Zusatzantriebspfad (3) über einen hydraulischen Kreis (11) mit einer einstellbaren hydrostatischen Pumpe (7) und einem Hydromotor (9,10) verfügt und die einstellbare hydrostatische Pumpe (7) über einen Nebenabtrieb (8) der Antriebsmaschine (1) antreibbar ist,
**dadurch gekennzeichnet, dass**
zum Schließen einer ansteuerbaren Kupplung (17), die zwischen der Pumpe (7) und dem Nebenabtrieb (8) angeordnet ist,
bei noch nicht geschlossener Kupplung (17) ein Förderelement (12) im hydraulischen Kreis (11) einen hydraulischen Volumenstrom durch die Pumpe (7) erzeugt, der die Pumpe (7) derart in Drehung versetzt, dass eine Differenzdrehzahl an der Kupplung (17) vermindert wird.

8. Verfahren nach Anspruch 7,
**dadurch gekennzeichnet, dass**
die einstellbare hydrostatische Pumpe (7) abhängig von einer Zieldrehzahl des Nebenabtriebes (8) eingestellt wird.

9. Verfahren nach einem der Ansprüche 7 bis 8,
**dadurch gekennzeichnet, dass**
der genannte hydraulische Volumenstrom zumindest teilweise von einer Spülpumpe (12) erzeugt wird.

10. Verfahren nach einem der Ansprüche 7 bis 9,
**dadurch gekennzeichnet, dass**
der genannte hydraulische Volumenstrom zumindest teilweise vom Hydromotor (9,10) eines sich drehenden Rades erzeugt wird.

## Claims

1. Drive device for a motor vehicle,
having a drive machine (1), a mechanical main drive path (2) and a hydraulic auxiliary drive path (3),
wherein the hydraulic auxiliary drive path (3) has a hydraulic circuit (11) with an adjustable hydrostatic pump (7) and a hydromotor (9, 10), and the adjustable hydrostatic pump (7) can be driven via an auxiliary output (8) of the drive machine (1),
**characterised in that**
a controllable clutch (17) is arranged between the pump (7) and the auxiliary output (8).

2. Drive device according to claim 1,
**characterised in that**
the clutch (17) is designed as a claw clutch.

3. Drive device according to claim 1,
**characterised in that**
the clutch (17) is designed as a shift clutch (17) with synchronisation.

4. Drive device according to one of the preceding claims,
**characterised in that**
the pump (7) is designed as an axial piston machine.

5. Drive device according to one of the preceding claims,
**characterised in that**
the hydraulic circuit (11) has a scavenge pump (12).

6. Drive device according to one of the preceding claims,
**characterised in that**
a torsional damper (18) is provided between the auxiliary output (8) of the drive machine (1) and the pump (7).

7. Method for operating a drive device of a motor vehicle,
having a drive machine (1), a mechanical main drive path (2) and a hydraulic auxiliary drive path (3),
wherein the hydraulic auxiliary drive path (3) has a hydraulic circuit (11) with an adjustable hydrostatic pump (7) and a hydromotor (9, 10), and the adjustable hydrostatic pump (7) can be driven via an auxiliary output (8) of the drive machine (1),
**characterised in that**
in order to engage a controllable clutch (17) which is arranged between the pump (7) and the auxiliary output (8),
when the clutch (17) is not yet engaged, a conveying element (12) in the hydraulic circuit (11) produces a hydraulic volume flow through the pump (7) which sets the pump (7) in rotation so that a differential speed is reduced at the clutch (17).

8. Method according to claim 7,
**characterised in that**
the adjustable hydrostatic pump (7) is adjusted in dependence upon a target speed of the auxiliary output (8).

9. Method according to one of claims 7 to 8,
**characterised in that**
the said hydraulic volume flow is produced at least in part by a scavenge pump (12).

10. Method according to one of claims 7 to 9,
**characterised in that**
the said hydraulic volume flow is produced at least in part by the hydromotor (9, 10) of a rotating wheel.

## Revendications

1. Dispositif d'entraînement pour un véhicule automobile, comprenant un mécanisme d'entraînement (1), une ligne principale d'entraînement mécanique (2) et une ligne d'entraînement supplémentaire hydraulique (3), la ligne d'entraînement supplémentaire hydraulique (3) comprend un circuit hydraulique (11) doté d'une pompe (7) hydrostatique réglable et d'un hydromoteur (9, 10) et la pompe hydrostatique réglable (7) peut être entraînée par un entraînement auxiliaire (8) du mécanisme d'entraînement (1), **caractérisé en ce qu'**un accouplement (17) pouvant être commandé est disposé entre la pompe (7) et l'entraînement auxiliaire (8).

2. Dispositif d'entraînement selon la revendication 1, **caractérisé en ce que** l'accouplement (17) est conçu comme un accouplement à crabots.

3. Dispositif d'entraînement selon la revendication 1, **caractérisé en ce que** l'accouplement (17) est conçu comme un embrayage (17) doté d'une synchronisation.

4. Dispositif d'entraînement selon l'une quelconque des revendications précédentes, **caractérisé en ce que** la pompe (7) est conçue comme une machine à piston axial.

5. Dispositif d'entraînement selon l'une quelconque des revendications précédentes, **caractérisé en ce que** le circuit hydraulique (11) comprend une pompe de balayage (12).

6. Dispositif d'entraînement selon l'une quelconque des revendications précédentes, **caractérisé en ce qu'**un amortisseur de torsion (18) est disposé entre l'entraînement auxiliaire (8) du mécanisme d'entraînement (1) et la pompe (7).

7. Procédé de fonctionnement d'un dispositif d'entraînement d'un véhicule automobile comprenant un mécanisme d'entraînement (1), une ligne principale d'entraînement mécanique (2) et une ligne d'entraînement supplémentaire hydraulique (3), la ligne d'entraînement supplémentaire hydraulique (3) comprenant un circuit hydraulique (11) doté d'une pompe (7) hydrostatique réglable et d'un hydromoteur (9, 10) et la pompe hydrostatique réglable (7) pouvant être entraînée par un entraînement auxiliaire (8) du mécanisme d'entraînement (1), **caractérisé en ce que** pour fermer un accouplement (17) pouvant être commandé, disposé entre la pompe (7) et l'entraînement auxiliaire (8), lorsque l'accouplement (17) n'est pas encore fermé, un élément de transport (12) dans le circuit hydraulique (11) génère un débit volumétrique hydraulique par la pompe (7) qui entraîne en rotation la pompe (7) de sorte à réduire une vitesse de rotation différentielle sur l'accouplement (17).

8. Procédé selon la revendication 7, **caractérisé en ce que** la pompe hydrostatique réglable est réglée en fonction d'une vitesse de rotation cible de l'entraînement auxiliaire (8).

9. Procédé selon l'une quelconque des revendications 7 à 8, **caractérisé en ce que** le débit volumétrique hydraulique indiqué est généré au moins partiellement par une pompe de balayage (12).

10. Procédé selon l'une quelconque des revendications 7 à 9, **caractérisé en ce que** le débit volumétrique hydraulique indiqué est généré au moins partiellement par un hydromoteur (9, 10) d'une roue tournante.
